# EUROPEAN PATENT SPECIFICATION

(11) **EP 3 841 655 B1**
(45) Date of publication and mention of the grant of the patent: **29.01.2025**
(21) Application number: 19852906.7
(22) Date of filing: 20.08.2019
(51) Int. Cl.: H04L 12/10

(54) **POWER OVER ETHERNET INTEGRATED WITH OR INTO A PREMISES SECURITY SYSTEM**
MIT ODER IN EIN GEBÄUDESICHERHEITSSYSTEM INTEGRIERTES POWER-OVER-ETHERNET
ALIMENTATION SUR ETHERNET INTÉGRÉE AVEC OU DANS UN SYSTÈME DE SÉCURITÉ DES INSTALLATIONS

(30) Priority: 20.08.2018 US 201862720089 P
(43) Date of publication of application: 30.06.2021
(73) Proprietor: BTU Research LLC, Houston, TX 77056 (US)
(72) Inventor: KANARELLIS, Michael, Houston, TX 77056 (US); MCANDREW, Charles, I., Magnolia, TX 77355 (US); DRIER, John, Sarasota, FL 34231 (US); SWATZEL, Kenny, Magnolia, TX 77316 (US)
(74) Representative: Rhein, Alain
(86) International application number: PCT/US2019/047346
(87) International publication number: WO 2020/041371

(56) References cited:
- EP-A1- 3 041 175
- CN-U- 207 603 936
- US-A- 5 990 577
- US-A1- 2010 312 926
- US-A1- 2012 287 774
- US-A1- 2017 368 958
- US-A1- 2018 131 401

## Description

### BACKGROUND OF THE INVENTION

### 1. Field of the Invention

The present invention relates to systems and methods for supplying uninterruptible power to a Power over Ethernet (PoE) device. More particularly, the present invention relates to a PoE backup system with a wireless internet backup.

### 2. Description of Related Art

A "Power over Ethernet" device is a powered device that works on electrical power supplied by an Ethernet cable. Power over Ethernet ("PoE") describes a technique to deliver electrical power via Ethernet cabling. A single cable transmits data and electrical power to devices, such as IP security cameras, network webcams, wireless access points, VoIP phones, network routers and others. There is no need for a separate power source for the PoE device, as can be seen in US 2012/287774 A1 and in US 5 990 577 A. IEEE PoE standards set signaling standards for power source equipment, the actual power source, and the powered device, so that the powered devices and power source equipment can communicate. The power source equipment and powered device detect each other and regulate the amount of power supplied to the PoE device. By IEEE PoE standards, there is only a limited power transmission available through an Ethernet cable.

An uninterruptible power supply "("UPS"), or uninterruptible power source, provides emergency power to a powered device when the main power source is disrupted. The UPS is an immediate and generally instantaneous alternative power supply available as soon as the main power source fails. In contrast, a standby or emergency system is a separate power source, which must be activated and then switched over to supply the powered device. The immediacy and lack of delay are important for sensitive electronic equipment and continuous data processing.

The UPS protects powered devices from loss of data, loss of status information related to the powered device, and the subsequent costs associated with repair and resetting of the powered device. Those extra costs avoided can include delays in data processing, sending technicians off site to the location of the powered device, and loss of revenue from downtime of the system. UPS also prevents disruption of the software of a powered device. An unexpected loss of power may necessitate a re-boot or restart of the system, causing more delay and downtime beyond the downtime caused by the disruption of power.

An unexpected loss of power may also disrupt internet connectivity. The powered devices providing internet connectivity can lose power and sever the internet connection because of the unexpected loss of power. Wireless internet backup protects the internet-dependent powered devices or any powered device using internet connectivity at the time of a power outage. Wireless internet backup can prevent loss of data, loss of status information, and the subsequent costs associated with re-establishing internet connectivity.

These and other objectives and advantages of the present invention will become apparent from a reading of the attached specifications.

### BRIEF SUMMARY OF THE INVENTION

Disclosed in this document is a system and method for supplying an uninterruptible PoE injection device comprising a rechargeable power supply that automatically provides power to connected devices on the DC side in the event of a loss of primary power to the system. The system may include capabilities for self-controlled power management, network routing and switching, network (e.g., Internet) connectivity (including maintenance of connectivity in case of loss of power), redundancy, security system integration, and load support expandability in a wide range of form factors (e.g., modular, system, board, environmentally sealed, waterproof, and the like), configurations (e.g., parallel, daisy-chained, serial, mesh networked, and the like) and performance levels (e.g., providing various levels of output power, various response times to outage events, and the like). The capabilities, form factors, configurations and/or performance levels, or other parameters, may, in embodiments, be user configured. In embodiments, the device includes a wireless networking capability (e.g., cellular) that automatically provides Internet connectivity to the connected devices in the event of a loss of wired Internet connectivity to the system, such as resulting from a power failure or other loss of network connection.

These and other systems, methods, objects, features, and advantages of the present disclosure will be apparent to those skilled in the art from the following detailed description of the preferred embodiment and the drawings.

References to items in the singular should be understood to include items in the plural, and vice versa, unless explicitly stated otherwise or clear from the text. Grammatical conjunctions are intended to express any and all disjunctive and conjunctive combinations of conjoined clauses, sentences, words, and the like, unless otherwise stated or clear from the context.

### BRIEF DESCRIPTION OF THE SEVERAL VIEWS OF THE DRAWINGS

The disclosure and the following detailed description of certain embodiments thereof may be understood by reference to the following figures.
Fig. 1 depicts a system for providing uninterruptable PoE via an injection device with rechargeable power supply, Optical Network Terminal (ONT) interface, wireless port interfaces, wired network interface, and data switch functionality.
Fig. 2 depicts a system for providing uninterruptable PoE via an injection device with rechargeable power supply, (compact) small form factor ports, modular wireless network interfaces (removable card and external FOB), wired network interface, and ONT interface.
Fig. 3 depicts daisy-chained systems, where each system provides uninterruptable PoE (and optionally uninterruptable network connection) via an injection device.
Fig. 4 depicts multiple power capsules for expanding a system for providing uninterruptable PoE (and optionally uninterruptable network connection) via an injection device.
Fig. 5 depicts a block diagram of interconnected components for an embodiment of a device for providing uninterruptable PoE and uninterruptable network connectivity.
Fig. 6 depicts a block diagram of a system for providing uninterruptable PoE via an injection device integrated with a premises security system.
Fig. 7 depicts a block diagram of a system for providing uninterruptable PoE via an injection device integrated into a premises security system.

### DETAILED DESCRIPTION OF THE INVENTION

Elements and terms for embodiments referenced herein may share similarity to elements and terms used in the embodiment of exhibits A (USP 9735618) and B (USP 9385562) filed herewith. The description of such elements and terms are intended to include characteristics from all such embodiments.

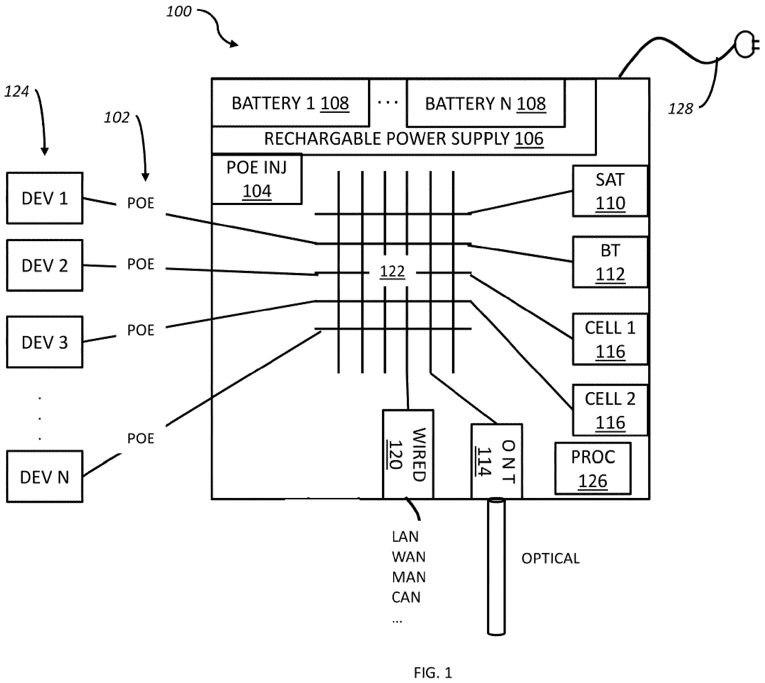

Referring to FIG. 1, a system 100 is depicted that facilitates providing uninterruptable PoE 102 via an injection device 104 with rechargeable power supply 106, Optical Network Terminal interface 114, wireless port interfaces 116, wired network interface 120, and data switch functionality 122.

In an aspect of the methods and systems of PoE backup, a system 100 may be configured to facilitate supplying uninterruptible PoE via an injection device. The system may comprise a rechargeable power supply 106 that automatically provides power to connected devices 124, such as a powered device, such as any of the devices described herein, such as networking devices (e.g., routers, access points and switches, among others, computing devices, lighting devices, security devices, emergency devices (e.g., alarms), and many others), such as on the DC side in the event of a loss of primary power 128 to the system. The system may also comprise a device or component that automatically provides network (e.g., Internet) connectivity to various devices, including the aforementioned types of powered devices, in the event of a loss of wired Internet connectivity to the system. Network connectivity may be provided by various types of wireless networking devices, such as via cellular-type connectivity 116, such as 2G, 3G, 4G, LTE, 4.xG, 5G and the like or other types of connectivity, such as satellite network connectivity 110, mesh network connectivity, personal area network connectivity, wide area network connectivity, local area network connectivity, metropolitan area network connectivity, and the like. The cellular-type wireless connection 116 may include access to a plurality of cellular providers, such as by supporting multiple simultaneous provider-specific SIM cards. Multiple cellular provider connectivity may be configured with a primary provider and a secondary provider, wherein the secondary provider may be activated due to primary provider connection-related trouble (e.g., loss of connection, unreliable connection, slow connection and the like). Multiple cellular provider logical interfaces may facilitate greater redundancy than a single cellular provider for backup of wired Internet connectivity. In embodiments, wired Internet connectivity may be provided by a first Internet service provider who may also provide a cellular Internet connectivity service. In such embodiments, the first Internet service provider's cellular connection may be made primary so that it is selected for use when primary power 128 disrupts the wired Internet service.

Network connectivity may alternatively or in addition be provided by Bluetooth 112, such as by connecting a plurality of BT devices in a BT mesh network with at least one access point that facilitates connection to the Internet. Internet connectivity may alternatively or in addition be provided by the wireless device via an orbital satellite link 110. Each of these wireless Internet connectivity capabilities may be provided as needed or as preferred based on user preferences, system demand versus provider constraints (e.g., bandwidth constraints that are too low for a given application need, and the like), availability, cost of connection, and the like.

In embodiments, control of each wireless port may be coordinated so that power, activation, utilization, security, and the like can be factored into providing a range of backup options for wireless connectivity. Power to the wireless ports (e.g., Bluetooth^{™}, cellular, satellite, and the like) may be managed to enable balancing the need for high speed switching when a primary Internet connection fails (e.g., due to primary power 128 loss) with overall power consumption and security considerations. In embodiments, the Bluetooth^{™} port hardware 112 may be powered up and communicating with an external network while one or more of the cellular 116 and satellite 110 ports are not powered up. In such embodiments, when an urgent loss of external network connection occurs, such as due to a loss of primary power 128, communication may be first directed to the active Bluetooth^{™} wireless port 112. The other backup wireless ports may be powered on and/or activated when primary power loss is detected; however, providing external network access through these other backup wireless ports may take a few seconds or longer to become active. In embodiments, at least one cellular wireless port 116 may be powered on and active even while primary power 128 is present, while other wireless ports, such as other cellular wireless ports 116, Bluetooth^{™} 112, satellite 110 and the like may remain powered off until a loss of primary power is detected. In embodiments, two different types of wireless port (e.g., Bluetooth^{™} and satellite) may be powered on and active while primary power is still available (so that an instantaneous, "live" backup is always available in case of unanticipated interruption of power or network connection) and other wireless ports may be powered off until needed. In such embodiments determining which connected devices are routed through the powered up wireless ports may be based on, for example, a bandwidth requirement for communicating with the connected devices. A connected device that requires high bandwidth communications may be routed to the active satellite port. Connected device(s) that have lower communication bandwidth demand may be routed through the active Bluetooth^{™} wireless port. Additional wireless ports that are available may be powered on and activated upon detection of loss of primary power to facilitate distributing bandwidth demand if needed or desired, and the like.

One or more of the backup wireless ports may be tested while primary power is available to ensure they can be successfully used when primary power is lost. Port testing may include powering on a wireless backup port, and communicating through it with an external resource, such as a web server accessible over the Internet and the like.

In embodiments, a physical or wireless port (e.g., Bluetooth^{™}, cellular, satellite, and the like) of the system for providing uninterruptable PoE may access an external network. Such an external network may be a Local Area Network (LAN), a Campus Area Network (CAN) (such as for a hospital, school, any complex of buildings or the like), a Metropolitan Area Network (MAN) (such as for a city, neighborhood, region, county, zip code, and the like), a Wide Area Network (WAN), a mesh network, an enterprise network, the Internet and the like. Access to external resources, such as the Internet, may be provided through various Internet Service Providers (ISPs), such as Spectrum^{™}, Brighthouse^{™}, Compass^{™}, Xfinity^{™}, Verizon^{™}, and the like. Access points for such providers may be powered by the system for providing uninterruptable PoE (e.g., may be a connected device, powered device and the like) to facilitate continued access to the ISP's network, resources and the like that are still accessible when primary power to a system is lost. In embodiments, such access points may receive primary power through a different port than its Ethernet port, so that detection of loss of primary power prompts the powered device (e.g., the access point as described herein) to switch from a primary power port to its Ethernet port for receiving power.

In embodiments, the range of wireless ports made available by the system for providing uninterruptable PoE may provide connection via a wireless port based on detection of lack of network activity over a primary (e.g., wired external) network port. This may be provided even when primary power is not lost and/or backup PoE is not activated. This type of system may facilitate maintaining access to external networks, the Internet, external resources and the like when network activity is disrupted. In this way, such embodiments provide power-backup, network-backup, data backup, and the like without requiring that primary power be lost. Detection of loss of communication through a network connection may be based on an activity monitor function that monitors network activity, throughput, and the like at least while primary power is available. In embodiments, network activity may be based on a heartbeat or echo-type function that sends network communication to at least one external networked resource and listens for a reply from the external resource. If a reply is received within an echo-type time limit, wireless backup access ports may be deactivated, remain deactivated, placed on ready-standby and the like. If a reply is not received as expected, a validation protocol may be activated that sends network validation communications (e.g., a burst of echo-type communications) and waits for an echo from the external resource over a period of time, such as a few seconds (e.g., approximately one second, two seconds, three seconds, five seconds, ten seconds, thirty seconds, one minute, or the like, depending on the desired user configuration and the requirements of the situation). If a proper echo response is not received, the validation protocol may optionally be repeated. If this repeated validation protocol also fails, one or more of the wireless access ports may be activated to replace the failed primary port so that communications that were being passed through the primary port will be passed through the activated wireless port. The wireless port may be activated prior to detection of a problem with communication over the primary port. The wireless port may be activated when an echo-type time limit expires. The wireless port may be activated when the first validation protocol is performed and/or when it fails. Optionally the wireless port may be activated when the repeated validate protocol is performed and/or when it fails.

In embodiments, any or all of the wireless ports described herein (e.g., Bluetooth^{™}, cellular, satellite and the like) may be powered by the system providing uninterruptable PoE at all times, even when primary power is available. In embodiments, the wireless ports may be powered by the uninterruptable PoE system via an Ethernet connection or via a connection that is independent of an Ethernet connection to the wireless port. For embodiments of the wireless port being integrated with the system for uninterruptable PoE, power may be provided from a rechargeable backup power source directly to the wireless port, such as when the wireless port is a mezzanine card, comprises one or more directly mounted components, is externally connected through other than an Ethernet connection, and the like.

One or more of the wireless ports may be powered on temporarily when primary power is available, such as to validate access through the wireless port to external resources. One or more of the wireless ports may be powered on continuously when primary power is available to facilitate seamless switchover when primary power is lost. In embodiments, a cellular wireless port may be powered on, while a Bluetooth^{™}, second cellular, and/or satellite wireless port may be unpowered or operated only in low power/standby mode while primary power is available. In such embodiments, a wireless port that is already powered on and active when primary power is lost may become the primary backup access port for connected devices and the like. As other wireless ports are powered-up and/or activated (e.g., brought out of standby mode) communication through one or more of these other wireless ports may commence.

In embodiments, the system may provide connection to the Internet via wired connection 120 that may operate while primary power is available. The Internet connection may be switched by the device to the wireless connection when, for example, primary power fails. The wireless device may be activated to establish a connection via cellular, satellite or the like upon loss of primary power to the system. In embodiments, the connection via cellular, satellite or the like may be established prior to loss of primary power to the system to facilitate switching the Internet connection from the wired link to the wireless link. In embodiments, the system may be in digital data communication with multiple wired devices, such as via a switch or router-like functionality that may include providing power to at least a portion of the devices via an Ethernet-like connection between the system and each of the devices.

A system 100 for supplying uninterruptible PoE via an injection device 104 may include a rechargeable power supply 106 that automatically provides power to connected devices 124 on the DC side in the event of a loss of primary power 128 to the system. It may also include, as described above, a cellular wireless device 116 that automatically provides Internet connectivity to the connected devices 124 in the event of a loss of wired 120 Internet connectivity to the system 100. In embodiments, the system 100 may also integrate a wireless 802.11 access point 118 to share (or to augment or replace) the cellular wireless Internet access to connected devices. In embodiments, the wireless 802.11-compatible access point 118 may facilitate wireless Internet connection to powered devices 124 that, for example due to a loss of primary power 128 no longer have access to the Internet. The 802.11-compatible access point 118 may be integrated into the system that provides the uninterruptable PoE so that upon loss of primary power 128, the 802.11 access point 118 begins to operate as an Internet access point, such as broadcasting network ID and related information to enable powered devices 124 being backed up to utilize this access point. Powered devices 124 may be configured with both wired and wireless interfaces that may automatically activate based on the status of each interface. Typically, if both a wired and wireless interface is available to a powered device 124, a networking module of the powered device 124 will likely select the network interface with the highest aggregate throughput, which is often a wired interface. Therefore, when the wired interface is no longer viable (e.g., due to a loss of primary power), the powered device 124, now being powered by the injection device 104, may logically switch to the wireless interface being provided by the uninterruptable PoE injection device. Internet connectivity may be provided directly by the uninterruptable PoE interface device via its cellular 116, Bluetooth 112, and satellite 110 Internet connectivity features. In an embodiment, a powered device 124 may be communicating over a wired connection when its source of power is lost. The wired connection may be through a third-party device that may or may not be connected with the uninterruptable PoE device. Upon loss of primary power, the powered device 124 may continue to operate because it may receive power through an Ethernet connection between it and the uninterruptable PoE device. However, a device through which it accesses the Internet via a wired connection may not be able to provide that access, such as due to the loss of primary power. The powered device 124, now operating on PoE 102, may begin to communicate with the 802.11 compatible access point 118 operating in the uninterruptable PoE device, thereby getting access to the Internet or the like without access to a primary power source 128.

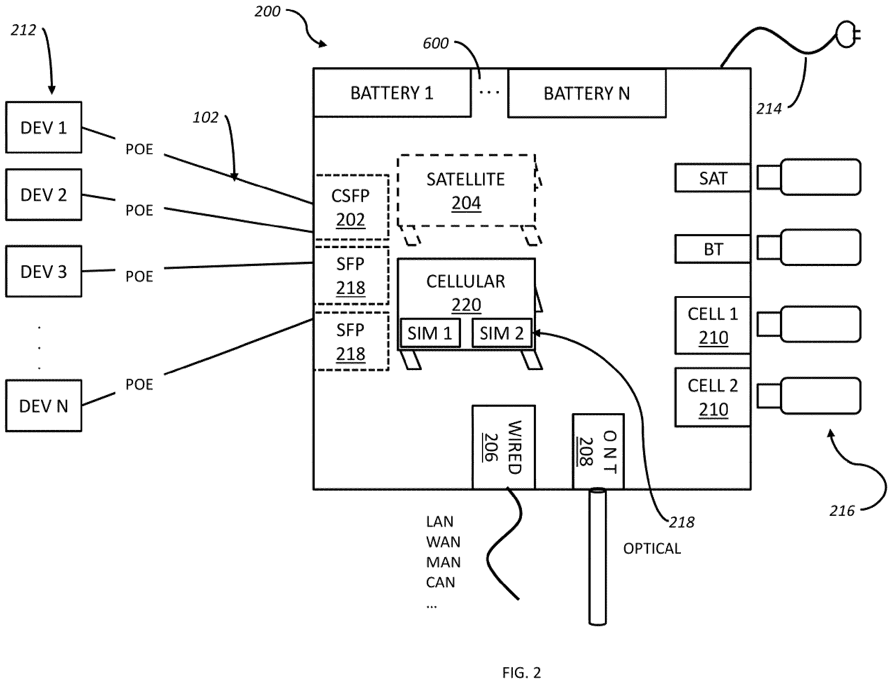

Referring to FIG. 2, a system 200 is depicted for providing uninterruptable PoE via an injection device with rechargeable power supply, (compact) small form factor ports 202, modular wireless network interfaces (removable card 204 and external FOB 216), wired network interface 206, and ONT interface 208. In embodiments, a system 200 for supplying uninterruptible PoE via an injection device may include a rechargeable power supply that automatically provides power to connected devices on the DC side in the event of a loss of primary power to the system. The system may further include a cellular wireless device 210 that automatically provides Internet connectivity to the connected devices 212 in the event of a loss of wired Internet connectivity to the system, which may be due to loss of primary power 214 or simply loss of wired Internet connectivity. In embodiments, the cellular wireless device 210 may be implemented as a removable card 220 that may be attached to a port, such as an internal port or via an external interface port (e.g., USB, and the like) of the injection device. In embodiments, the removable card may be configured to access a single cellular network provider. In embodiments, the removable card may be configured to access more than one cellular network provider, such as by supporting a plurality of network provider-specific SIM cards 218. The system may alternatively be configured to support multiple cellular wireless interface removable cards, such as through multiple internal ports, multiple USB ports, and the like. In embodiments, the uninterruptable PoE system is an enclosed system that incorporates the cellular interface removable card 220 internally so the enclosed system integrates cellular and uninterruptable PoE.

Referring again to FIG. 1, in embodiments, a system 100 for supplying uninterruptible PoE via an injection device may include a rechargeable power supply 106 that automatically provides power to connected devices 124 in the event of a loss of primary power to the system, a network switch 122, and a wireless device that automatically provides Internet connectivity to the connected devices in the event of a loss of wired Internet connectivity to the system. The system may include a network switch 122 that facilitates communication among a plurality of connected devices 124 and further facilitates communication from the devices to an external network, such as the Internet. While primary power is available, the switch 122 may provide access to the external network, such as the Internet. In embodiments, the switch 122 may facilitate communication between the connected devices 124 and the Internet via a wired connection 120 from the switch 122 to a device that connects to the Internet or to the Internet directly. Upon primary power loss, a wired Internet connection 120 may be lost and/or may experience unacceptable service performance or interruption (e.g., networking delays that may prevent important or services of the connected devices to be provided on a timely basis, and the like).

The connected devices may be connected to the system 100 for supplying uninterruptible PoE via Ethernet cable(s) that facilitate digital communication between the switch 122 and the connected devices 124 as well as enable providing power to the connected devices from the system for supplying uninterruptible PoE. In embodiments, upon primary power loss, the switch 122 may remain active because the switch 122 may be powered by a battery back-up feature of the system for supplying uninterruptible PoE. However, because the primary powered interface to the Internet may cut out due to lack of primary power 128, the switch 122 may redirect connected device Internet traffic to a wireless access port provided by the system for supplying uninterruptible PoE. The wireless access port may provide access to external networks, such as the Internet via various wireless networks, including without limitation, Bluetooth^{™} 112, cellular 2G, 3G, 4G, 4G+, 5G, and any other type of cellular radio communication system, as well as satellite-based wireless networks. Descriptions and examples of such a wireless access port are provided elsewhere herein. The system 100 for supplying uninterruptable PoE via Ethernet cable(s) may configure the wireless access port to continue to provide the logical connections that were taking place over the wired Internet connection while primary power was still available. Data transmissions that may have been interrupted when primary power was lost may be retried through the wireless access port.

In embodiments, the wireless access port may be active and operational while primary power is still available. Communication by the switch through the wireless access port to destinations, such as network-based servers, URLs, and the like may be performed by the switch while primary power is active to ensure that switch-over from wired to wireless may be done seamlessly and without loss of data.

In embodiments, the wireless access port may comprise a plurality of distinct ports. Examples and description of a wireless access port comprising multiple ports are provided elsewhere in this application. The switch may be configured to access each distinct wireless port (e.g., Bluetooth^{™}, cellular, satellite, and the like) separately so that each may be operated as needed to maintain external network access to the connected devices. As an example, the switch may facilitate connecting one or more of the connected devices to one or more of the wireless ports as well as to the wired external/Internet port. In these embodiments, a first portion of the connected devices receiving PoE from the uninterruptable power supply system may be logically connected via the switch to a Bluetooth^{™} wireless access port, a second portion of the connected devices may be routed via the switch to one or more of the cellular port(s) and a third portion of the connected devices maybe routed by the switch to one or more satellite ports. In embodiments, a fourth portion of the connected may not be routed to the wireless access port, such as based on a business rule associated with the fourth portion of the connected devices. Selection of which ports to activate, which portions of connected devices to route to one or more of the ports, and the like are described elsewhere in this specification.

Referring again to FIG. 1, in embodiments a system for supplying uninterruptible PoE via an injection device may include a rechargeable power supply that automatically provides power to connected devices in the event of a loss of primary power to the system, a network switch, and a wireless device that automatically provides Internet connectivity to the connected devices in the event of a loss of wired Internet connectivity to the system. The system may be user-configurable to use either or both of wired connectivity and wireless connectivity. In embodiments, a user configurable system may enable a user to specific wireless port parameters, such as when a wireless port should be powered on, when a wireless port should be accessed, the number or selection of a group of connected devices to process through a wireless port, one or more service providers for each wireless port, routing protocols for data being communicated by a connected device through each wireless port, and the like. In an example of user configurability, a system for providing uninterruptable PoE may have two wireless ports available, a cellular port and a satellite port. A user of such a system may configure each of the two wireless ports so that when an event indicating that the wireless port(s) are to be used occurs, the user's selected configuration is employed. In the example, the user may configure the cellular port as being powered up continuously even while primary power is available and the satellite port being powered up only when primary power is detected as lost. In this example, the cellular port may be available for backup in the event that primary power is available but a primary external network connection is disrupted, whereas the satellite port may be available only when primary power is lost.

In embodiments, other user configurable parameters may include features that limit which connected devices may access which wireless ports. As an example of such features, a system may provide uninterruptable PoE to two connected devices. One of the devices may be configured to communicate with a particular third-party service, and the other device may be configured to communicate with another third-party service. Each third-party service may have communication agreements with different cellular providers. A user may configure the system to direct communications from one of the devices to its corresponding third-party service over a wireless connection provided through the cellular provider with which the third-party service has a communication agreement. In this way, communication over a wireless cellular connection during primary power loss or as a result of primary network disruption may meet certain user configuration parameters.

Referring again to FIG. 2, in embodiments, a system for supplying uninterruptible PoE via an injection device may include a rechargeable power supply that automatically provides power to connected devices in the event of a loss of primary power to the system, a network switch, and a wireless device that automatically provides Internet connectivity to the connected devices in the event of a loss of wired Internet connectivity to the system, where the system integrates a small-form factor pluggable (SFP) transceiver port 218 and auto-negotiates a connection when a device connection is detected. In embodiments, the SFP transceiver port 218 may be an SFP+ transceiver port, an SFP28 transceiver port, a compact SFP transceiver port that supports at least two physical connections, and the like.

In embodiments when a device, such as a connected device 212 or powered device as described herein is connected through an SFP transceiver port 218 to the system 200, the system 200 may automatically configure the port 218 for communicating with and providing power to the device 212 so that when primary power 214 is lost, the SFP-connected device 212 can be provided uninterruptable power over the connection through the SFP port, such as via PoE and the like. Also in embodiments, the connected device 212 and the system 200 for providing uninterruptable PoE that includes a switch 122 may automatically configure the switch 122 to facilitate routing the connected device 212 to at least one of a plurality of wireless ports to provide external network connectivity when primary power 214 is lost.

Referring again to FIG. 1, in embodiments, a system for supplying an uninterruptible power-over-networking injection device comprising a rechargeable power supply that automatically provides power to connected devices on the DC side in the event of a loss of primary power to the system, and a network switch, which supports both optical and Ethernet connections. Optical connections may include an Optical Network Terminal (ONT) interface 208 that may facilitate connection of optical networks with copper-based networks, such as coaxial cable, twisted pair, and the like connections. In embodiments, a plurality of connected devices 212 may connect to the system 200 via a cable that facilitates providing data communications and power to the connected devices. The system 200 may connect to external networking systems via an optical (e.g., fiber-based) port. The system may further facilitate connection between the connected devices 212 and the fiber-connected external systems 208 by operating at least in part as an Optical Network Terminal (ONT) 208. In embodiments, a connected device may connect to the system via a combination of fiber-based and copper-based Ethernet cable connections to facilitate use of the fiber for high speed data communication and the Ethernet cable for providing at least uninterruptable PoE to the connected devices.

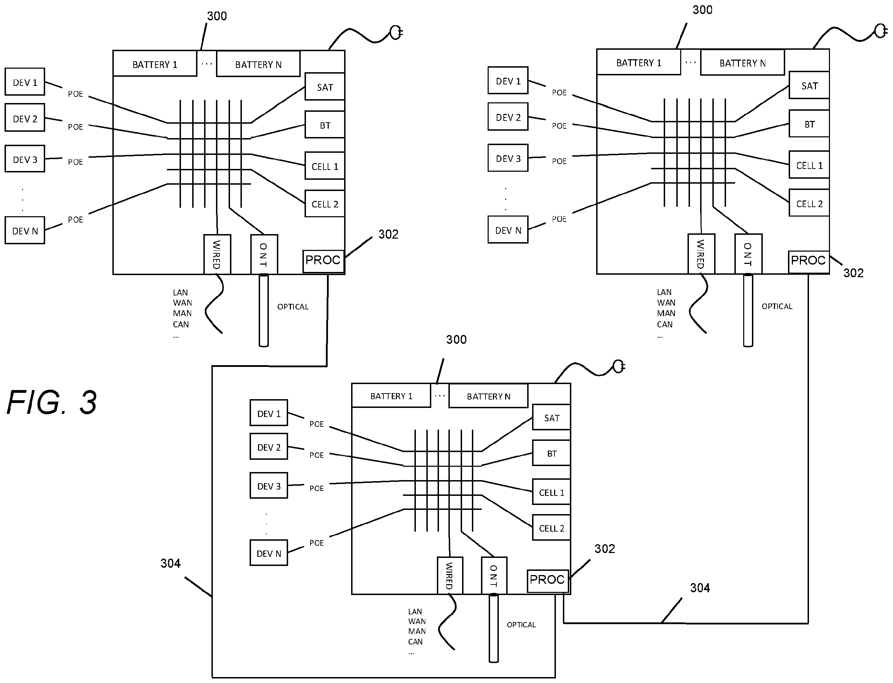

Referring to FIG. 3 daisy-chained systems are depicted for providing uninterruptable PoE via an injection device. In embodiments, a system is provided for supplying an uninterruptible PoE injection device comprising a rechargeable power supply that automatically provides power to connected devices on the DC side in the event of a loss of primary power to the system. The system integrates a microprocessor operated by device firmware and an Ethernet connection allowing the microprocessor to communicate with other devices on the network. The microprocessor firmware for the system can be reprogrammed via the network without interrupting power delivery to the network.

Portions of the system may be controlled by the processor 126, 404 (such as a microprocessor, application specific integrated circuit (ASIC), field programmable gate array (FPGA) or the like), such as monitoring network integrity, primary power status, backup power charge and usage, powered/connected device configuration and interfacing, configuration and operation of wireless backup network ports, and the like. From time to time, firmware that the processor uses for operation may need to be configured, such as when a change occurs to one or more of the physical configurable elements (e.g., number of backup battery cells, number or type of wireless ports, and the like). In embodiments, the processor firmware may be changed, e.g., reprogrammed via a network connection of the system. The system may be configured, such as with hardware devices that facilitate maintaining PoE independently of the processor firmware being reprogrammed. In such embodiments, PoE may be provided by the system to connected devices, such as via an injection device while the firmware for a processor that may facilitate control of providing PoE may be reprogrammed via the network. In embodiments, reprogramming the firmware over the network may be performed through use of dual firmware storage facilities. The processor may execute the firmware in one of the storage facilities, which may allow the other firmware storage facility to be reprogrammed, such as over the network. In embodiments, the firmware may be reprogrammed over the same network connection through which PoE is being provided. In other embodiments, the processor may execute firmware that is provided over the network without interrupting power delivery to the network. Executing firmware over the network may facilitate reprogramming processor firmware, such as firmware locally accessible by the processor, without disrupting operation of the processor and therefore without interrupting power delivery to the network.

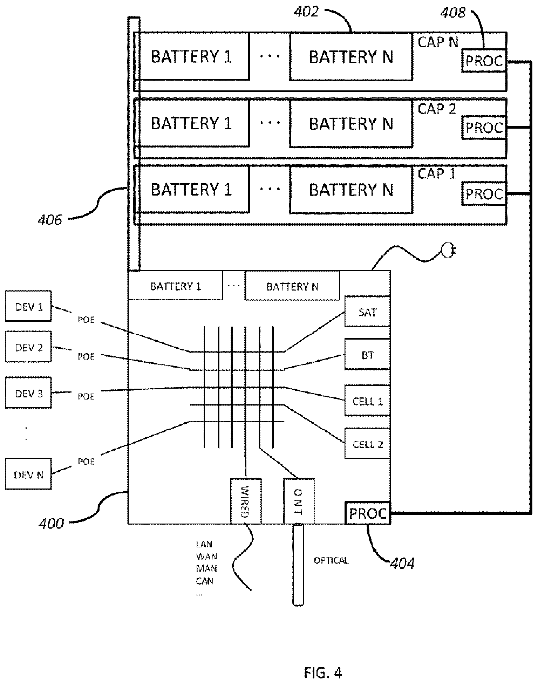

Referring to FIG. 4, multiple power capsules 402 are depicted for expanding a system for providing uninterruptable PoE via an injection device 400. In embodiments, a system for supplying an uninterruptible PoE injection device 400 may include a rechargeable power supply that automatically provides power to connected devices on the DC side in the event of a loss of primary power to the system. The system may also integrate a processor 404 (such as a microprocessor, application specific integrated circuit (ASIC), field programmable gate array (FPGA) or the like) operated by device firmware and an Ethernet connection allowing the processor to communicate with other devices on the network. The processor firmware may be configured to allow multiple systems to be daisy-chained and may be configured to communicate with other backup power sources and to synchronize with their power maintenance and shutdown modes.

In embodiments, multiple systems may be daisy-chained logically over the network for coordination of providing PoE, power maintenance, shutdown modes and the like. Multiple systems connected together via a common Ethernet connection that also connects at least one device for receiving PoE, may use the data communication capabilities of the network to coordinate activity, such as coordinating when each daisy-chained device should provide PoE via the common Ethernet connection. Processor firmware for coordinating operation on the systems may facilitate a first system providing a data signal over the common Ethernet connection to the other daisy-chained system that indicates the first system is providing PoE. The other daisy-chained systems may respond in acknowledgement. Coordination among the daisy-chained systems may enable the systems to coordinate use of their uninterruptable power sources (e.g., batteries) to extend the duration of backup power by allowing each system to provide as much PoE as it can before one of the other daisy-chained systems provides the PoE. With multiple systems, each system may, in turn, provide PoE while primary power is lost. Coordination may include determining an order of systems to provide PoE, a timing for switching providing PoE from one system to another, timing of systems shutting down due to backup power sources being depleted, and the like.

In embodiments, daisy-chained systems may coordinate operation, such as operation when primary power is lost, while providing PoE to distinct sets of connected devices. Each system may provide power to a separate set of connected devices, while coordination among the systems may facilitate communicating battery backup status and the like that may be further communicated to the connected devices. In an example, an array of connected devices may perform load sharing among them. The array of connected devices may be divided into two or more groups for providing PoE from two or more daisy-chained uninterruptable PoE systems. Coordination among the two or more daisy-chained systems may enable the devices performing load balancing to adjust their load balancing algorithm to ensure that power consumption from each of the PoE systems is also balanced, so that each group of the array of devices can continue to operate as long as possible. Without at least some aspect of this coordination, one or more of the groups of arrays may consume much more power than another of the groups, thereby causing power to the higher consuming group to be depleted prematurely compared to other groups. When a group of devices can no longer receive backup PoE, they may have to shut down and load balancing among the devices is further impacted.

In embodiments, firmware that facilitates communicating with other backup power sources and to synchronize with their power maintenance and shutdown modes, may enable a system for providing uninterruptable PoE via an injection device to schedule providing backup power even when primary power is not lost, such as during power maintenance procedures, and the like.

In embodiments, a system for supplying an uninterruptible PoE injection device 400 comprising a rechargeable power supply that automatically provides power to connected devices, such as on the DC side, in the event of a loss of primary power to the system. The system may integrate a processor 404 (such as a microprocessor, application specific integrated circuit (ASIC), field programmable gate array (FPGA) or the like) operated by device firmware, and an extended battery cover with one or more additional power capsules 402 to extend the amount of backup power that can be provided. Each power capsule / battery pack 402 may integrate a processor 408 capable of reporting battery status, monitoring recharge, enabling/disabling the battery circuit, and the like. Each of the power capsule processors 408 may communicate with a system processor 404 to facilitate coordination of use of the extended battery packs to provide backup PoE. In an example, each power capsule processor 408 may communicate its recharge status so that the system processor 404 may estimate how much backup time is available from each power capsule 402. By processing the recharge status of each power capsule 402, a total amount of backup time available from the system may be calculated, such as based on an anticipated demand for backup power that the system must provide. In embodiments, the capsule processors 408 and the system processor 404 may communicate battery status, recharge state, and the like to facilitate optimizing the use of available battery backup capacity, such as to meet a service requirement of a portion of the connected devices that are receiving PoE from the system for providing uninterruptable PoE.

In embodiments, the system processor 404 may communicate with the power capsule processors 408 to coordinate operation of each capsule 402, such as when each capsule should be activated and/or deactivated. This may be based on one or more rules (which may be application-specific, such as based on the needs of a connected device or powered device) or may, in embodiments, be user-configured. The processor for each capsule 402 may activate and/or deactivate the corresponding backup battery in response to receiving such a command from the system processor. Alternatively, the processors for a plurality of the capsules 402 may communicate with each other to enable/disable the corresponding battery circuits to provide PoE.

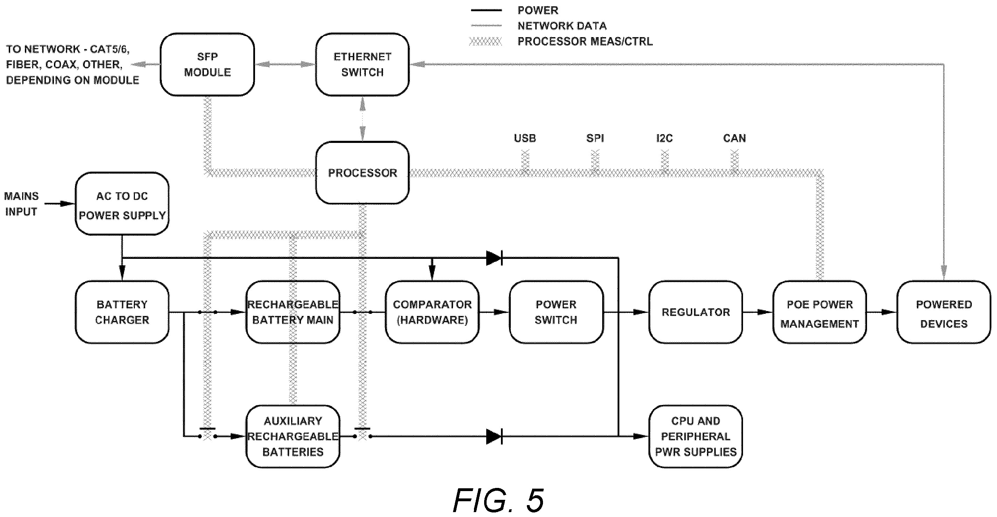

FIG. 5 depicts a block diagram of interconnected components for an embodiment of a device for providing uninterruptable PoE and uninterruptable network connectivity. Referring to Fig. 5, a system for providing uninterruptable PoE 500 may include a rechargeable power supply 502 that automatically provides power to connected devices (such as a powered device 504 as described herein) on the DC side in the event of a loss of primary power to the system. The system may include a small-form-factor port (SFP) module 510 that may facilitate communication between the connected devices and external pluggable networks that use wired interfaces such as CAT5/6, Fiber, Coax, and the like. The SPF module 510 may provide direct support for a range of interfaces including those above. Other interfaces may similarly be supported through an interface-specific SFP module 510. The SFP module 510 may also support communicating with multiple external networks through, for example, a compact SFP module. External network types can include, without limitation, LAN, MAN, CAN, WAN and the like.

The system may further include a switch, such as an Ethernet switch 506 that may facilitate communicating among powered devices over Ethernet, between powered devices and through the SFP module to an external network, between a processor 512 that may control the system and either the powered devices, the SFP module 510 and the like. The Ethernet switch 506 may further connect to a wireless port of the system (not shown) that may facilitate access to external networks, such as those described above, when communication through the SFP module is not possible (e.g., due to primary power loss, network interruption, and the like).

In embodiments, the system 500 may include a processor communication/control channel 514 that may facilitate communication among the processor, SFP module, various peripheral ports (e.g., ports for USB, SPI, I²C, CAN and other protocol communications and/or power, and the like), and battery backup modules (e.g., power capsules) that may provide power to the connected devices even when primary power that may be received through a Mains Input, such as feeding an AC to DC power supply, is lost. Power management may be at least partially controlled by firmware executed by the processor. In embodiments, the processor 512 may communicate with other processors that directly control individual power capsules, such as processors that provide direct control for one or more rechargeable batteries, one or more auxiliary rechargeable batteries, and the like. The rechargeable batteries may be configured to provide continuous PoE to powered devices. The auxiliary rechargeable batteries 516 may be configured to provide power to the processor, peripherals 518, one or more wireless ports that may be used to provide external network connectivity when the SFP module can no longer communicate over one of its wired connections, and the like.

In embodiments that include multiple backup battery sources, such as when the system is configured to support adding power capsules and the like or when multiple systems can be daisy-chained, communication from the processor to battery-based power sources may include management of timing of activation/deactivation, shutdown, testing, recharge, and the like of each of the multiple backup battery sources. The backup battery sources may be charged by a battery charger 520, such as fed by the AC to DC power supply 522, when power is available, such as from the Mains Input.

In embodiments, peripheral devices that may receive uninterrupted power even when the Mains Input is lost may include one or more wireless ports, such as a Bluetooth^{™} port, one or more cellular ports (e.g., Verizon^{™}, AT&T^{™}, and the like), one or more satellite ports, and the like. The auxiliary rechargeable batteries may also continuously power the Ethernet switch when Mains Input is lost.

In an example of system operation when Mains Input is lost, the processor 512 may communicate with a PoE management module 524 to ensure that power is continuously supplied to powered devices by energizing the powered devices via the power delivery aspects of Ethernet (e.g., PoE). The processor may communicate with the auxiliary rechargeable batteries to ensure that peripherals, computing resources, data backup resources and the like that are not powered over Ethernet are properly maintained in an operational state even when the Mains input is lost.

The processor may communicate with the Ethernet switch to reconfigure it so that data communications between the powered devices and external networks is maintained (e.g., by routing communication to an alternate/backup wireless port of the system rather than the SFP module). The processor may also communicate with the SFP module to detect (independent of Mains input being lost), if access through the SFP module to the external networks is adequate for the demands of the powered devices. If Mains input power is lost or the SFP module cannot communicate acceptably to external networks, the processor may reconfigure the Ethernet switch to route traffic that was destined to/from the SFP module to an alternate module, such as a wireless port as described herein to ensure that communication is seamlessly maintained through network-based or Mains input-based disruptions.

In embodiments, electronic premises security systems, such as life safety system and the like may be configured with a power delivery system that automatically and instantly switches power sources from a main source of power to an available source of backup power based on a detection of insufficient main power source signal (e.g., a voltage drop and the like). The power delivery system may provide PoE, such as via an injection device. In embodiments, a power delivery system, such as a module backup power delivery system for providing PoE via an injection device may be integrated with or into an electronic premises security system. In embodiments, such a power system may automatically activate power delivery over Ethernet via an injection device upon detection of a complete loss of mains power or when mains power cannot reliably meet the required demand of the electronic premises security system components.

In embodiments, electronic premises security systems configured to operate via power provided over Ethernet may be configured with an auto-negotiation PoE injection device that actively adjusts among multiple power input sources so that a power demand of the electronic premises security system is met independent of any one power source being insufficient to meet the electronic premises security system demand. In embodiments, an auto-negotiation PoE via an injection device power system may be integrated with or into the electronic premises security system. Such a power delivery system may monitor power being received from a mains power source and the like as well as power being provided over Ethernet to the electronic premises security system devices. When mains power falls below an operational threshold (e.g., 85% of a standard main power voltage), a backup power source, such as one or more batteries (e.g., rechargeable batteries and the like), may be activated and used to supplement or replace the mains power as a source of power for providing PoE to the electronic premises security system devices. In embodiments, an auto-negotiation module of the power system may operate to ensure that power levels output as PoE meet a required demand of the electronic premises security system devices being powered over Ethernet by the power system.

Additionally, a power system for an electronic premises security system, such as the PoE via an injection device power delivery system described herein may include signal generation sub-systems or components that can complement and/or replace signals generated by mains-only powered signal generation equipment, such as portion(s) of an electronic premises security system, during mains-fault conditions. A signal generation sub-system may also receive signals or conditions that indicate a signal should be generated for conditions other than a mains-power fault. The signal generation sub-system may apply logic and optionally machine learning to signal data from such signal sources thereby learning about prioritization that may facilitate performing risk analysis of which signals to propagate during a mains-fault. The signal generation sub-system may use a ranking scheme that may adapt a priority order for signal propagation based on certain conditions, such as a duration of mains-fault or compete loss of mains power, urgency of response associated with the other signal sources, and the like. In an example, a signal source that indicates a premises exterior door is closed but unlocked may present a risk that a risk analysis algorithm may suggest being allocated a higher priority than a mains-fault condition if the mains-fault condition is being fully covered by the backup power system, such as by delivering PoE, and the like. In another example, a signal source that indicates a premises door is closed but unlocked may present a risk that a risk analysis algorithm may suggest being allocated a lower priority than a mains-fault condition if the backup power system cannot or will soon not be able to ensure sufficient power to monitor the door closed condition.

In embodiments, a system for providing PoE via an injection device may be integrated with or into a premises security system, such as a life safety system and the like and may communicate via radio frequency signals in accordance with radio frequency device standards, such as those associated with cellular communication, WiFi, Bluetooth and the like. Use of radio frequency signal communication may be provided as a backup for wired or other communication means that become disabled or incapable of proper operation due to a mains power loss and/or fault and the like. Premises security systems and the like that communicate via low power radio communications may automatically be redirected to the power system's low power radio communications circuits upon mains power loss or fault.

In embodiments, a PoE via an injection device system may be embodied as a communication switch, router, and the like for signals being communicated among sub-systems of the electronic premises security system, including external communication sub-systems such as wireless signal transmitters and receivers, wired signal transmitters and receivers, and the like. When mains power faults or fails, the communication switch/router and the like may remain operational due to the availability of backup power provided by the PoE device. The communication switch/router may automatically change routing of signals that are destined for external devices to communication resources that receive PoE, such as a cellular transmitter and the like that may be integrated into or with the PoE via an injection device system; thereby facilitating nearly continuous communications between resources of the electronic premises security system and external devices, such as web servers and the like.

In embodiments, a power supply system for use with a premises security system, such as a life safety system and the like, may be integrated with or have integrated there into a secondary power supply sub-system that automatically provides energy to the security system in the event of primary power total loss or when primary power voltage level is insufficient for proper functionality of the security system components. In embodiments, such a power supply system may provide PoE to the premises security system components, such as when there is a mains loss or fault. The power supply system may detect the mains loss or fault and respond by providing PoE in as little as a few hundred milliseconds thereby ensuring power is provided to security system devices that produce signals such that these devices may continue to produce the signals without loss. Additionally, the power supply may dynamically provide PoE based on mains fault conditions without automatically transmitting an alarm for the mains fault condition. Alarm generation may be provided based on detection of conditions beyond mains fault, such as if the mains fault persists longer than a configurable duration of time, and the like.

In embodiments, a mains-fault detection and backup power system, such as a system for providing PoE via an injection device may be integrated with or into a premises security system. The backup power system may further be configured with a modular backup battery chassis that can be configured with a plurality of backup power capsules that can be configured into a unified power delivery system. Such as power delivery system may be configured with any number of capsules and any number of chasses, all of which may be controlled by a power management system processor to ensure that demand required for continued operation of the premises security system for at least 4 hours is provided. The power deliver system may further ensure alarm generation of a premises security system is provided when a mains power fault is detected and for at least 15 minutes or more beyond the continued operation of the premises security system. Such a module power delivery system can be configured to provide not only battery activation-time management to maximize a duration of power being supplied, but it can also manage load support, activating one or more batteries as needed to ensure sufficient demand is met. Such a backup power delivery system may manage battery activation so that sufficient power is reserved for at least 15 minutes of alarm generation independent of the amount of demand required to operate the premises security system. In this way, the premises security system will remain active for as long as possible while ensuring sufficient reserve for continued alarm generation.

In embodiments, a backup power delivery system, such as a system for providing PoE via an injection device described herein and in the documents filed with this application may be integrated with or into a premises security system and may provide for adaptable control while ensuring power demand parameters associated with operating the premises security system are met for each installation. Therefore, the PoE system may be configured with sufficient power reserves (e.g., backup batteries and the like) to ensure that a premises security system continues to meet a required level of performance while being powered during a mains-fault condition and the like. Required performance of a premises security system may include connectivity to external systems. In such an embodiment, the PoE system described herein may facilitate continued communication through dedicated wireless communication devices, such as cellular, and the like that may be activated when mains power fault is detected and allocated to provide communication services that may be interrupted due to a mains power fault.

In embodiments, a modular backup power delivery system, such as a system for providing PoE via an injection device described herein may be integrated with or into a premises security system and may further be configured with power modules that can be disconnected while ensuring continuity of power delivery from the remaining modules or from the mains power because each power module can be computer controlled to be deactivated, effectively removing the module from the power distribution channels. Additionally, by providing PoE when a mains power fault or failure is detected, disconnecting the output of the backup power system (e.g., disconnecting the Ethernet cable(s) that connect the backup power system with the premises security system) is safely accomplished because the backup system can be configured to prevent energizing the PoE signals at any time.

In embodiments, a module backup power delivery system, such as a system for providing PoE via an injection device may be integrated with or into a premises security system and may be configured to provide mains-fault detection and powering of premises security system components while further monitoring operation of the backup power sources, such as rechargeable batteries and the like. In embodiments, each power module may be configured with a processor and battery sensing circuits that detect battery voltage and the like. When a supply of energy is available for charging such a battery, the processor may execute a battery charging algorithm and control the battery to be charged as needed. The battery charging algorithm may monitor the battery sensors and may detect when the battery is no longer charging or not charging at a minimum rate. Such detection may be communicated to the backup power supply system (e.g., via a communication bus or signal that propagates between the backup system and the backup battery) so that a battery charging trouble signal or alarm or the like can be generated.

In embodiments, a power delivery system, such as a system for providing PoE via an injection device may be integrated with or into a premises security system. The PoE delivery system integrated with or into the premises security system may perform its functions, such as without limitation power distribution, management, backup switch over, mains reconnection, and the like automatically. Operation of the power delivery system during full mains supply or when mains is faulty or lost may ensure that the operation of any powered devices, such as those for a premises security system may operate without interfering with power for alarms, lighting, elevators, building control and the like. A power delivery system for providing PoE via an injection device may optionally provide power to alarms, lighting, building control, life safety systems and the like while also providing power to a premises security system. In embodiments, PoE connections may be dedicated for some devices, such as alarms, lighting, elevators, building control and the like; thereby ensuring that power distribution and/or consumption issues with separately connected devices does not interfere with power distribution to other separately connected devices.

In embodiments, a power delivery system, such as a system for providing PoE via an injection device that may be integrated with or into a premises security system may be constructed to operate under a range of operating conditions, such as conditions that the premises security system may be required to meet including, without limitation operation when a main power input is compromised and does not provide sufficient voltage, such as when the main power input is faulty and/or when there is a complete loss of mains power, even for extended periods of time, such as 4 or more hours. Other exemplary operating conditions that may be met by a PoE Ethernet via an injection device include operating temperatures from below 0 degrees centigrade to over 50 degrees centigrade, relative humidity of at least 85 percent at ambient temperatures at or below 30 degrees centigrade.

In embodiments, a power delivery system, such as a system for providing PoE via an injection device that may be integrated with or into a premises security system may be used to power a low-power radio system or device of the premises security system. Such as low-power radio device may be primarily powered by a dedicated source of power, such as a battery (e.g., a dry cell) or by the power delivery system, such as through an Ethernet connection that facilitates use of PoE injection device. In embodiments, a PoE injection device may be integrated with or into the low-power radio device as a backup to the primary power source (e.g., a dry battery and the like). The PoE injection device may be configured to control and operate one or more backup batteries that can be activated automatically when the primary power source no longer provides sufficient voltage to ensure proper operation of the low-power radio device, such as when an output of a dry cell battery used as a primary power source is below a depletion threshold. The PoE injection device system may monitor the primary power, thereby automatically detecting when it is below the depletion threshold. In embodiments, the PoE injection device may be alerted, such as by a signal generated by the primary power source, when the primary power source is near or below the depletion threshold. Upon detection of a primary power source output being below a depletion threshold, the PoE via an injection device system may additionally generate one or more alerts, such as an audible signal and the like to distinctively identify the affected low-power radio device. Embodiments in which a PoE via an injection device system is integrated with or into a low-power radio portion of a premises security system may be configured so that the low-power radio portion is powered constantly above a battery depletion threshold for at least one year.

In embodiments, a PoE via an injection device integrated with or into a low-power radio device and the like may be configured to facilitate detection of removal of the low-power device, such as when the device is moved from an installed location. The PoE via an injection device may be configured with a physical port that is monitored by a processor of the device to detect the presence of a signal on the port. Such a signal may be generated through connection to a reference element of the installation, such as a physical output of the low-power radio device. Upon removal of the low-power radio device, the processor may no longer detect the signal on the port, which may trigger generating an alert, such as transmission of a signal that indicates the removal of the individual low-power ratio device.

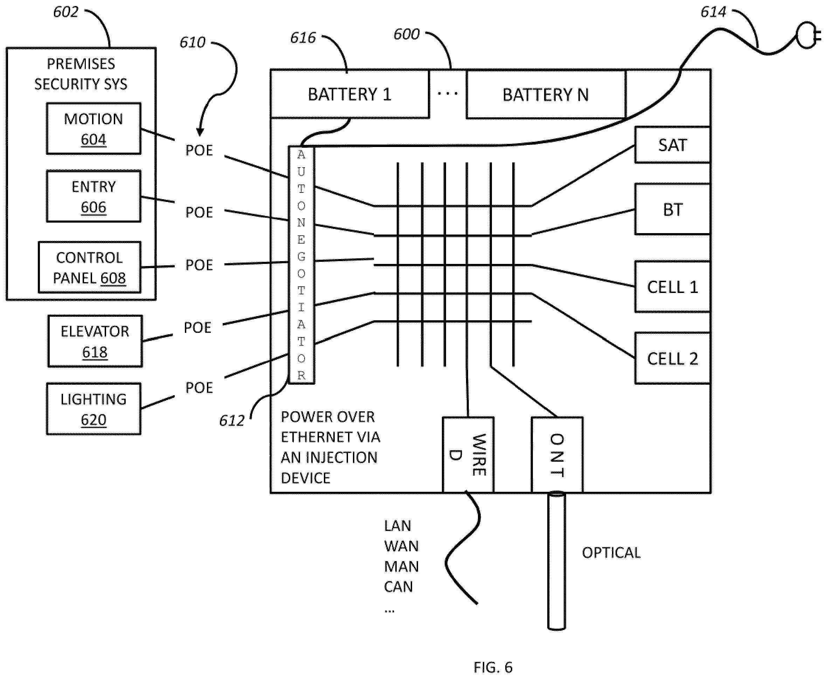

In embodiments, Fig. 6 depicts a PoE via an injection device system 600 integrated with an electronic premises security system 602 that includes security devices, such as motion sensors 604, entry sensors 606, a control panel 608 and the like being powered over Ethernet 610 by the injection device. The PoE via injection device 600 exemplarily includes an auto-negotiation module 612 that monitors input power sources 614, 616 and power output over Ethernet 610 to ensure power meeting the requirements of the premises security system 602, 618, 620 is provided. Features of the PoE system 600 not described in this portion of the specification may be described elsewhere herein and at least in the portion that describes the embodiment of Fig. 1.

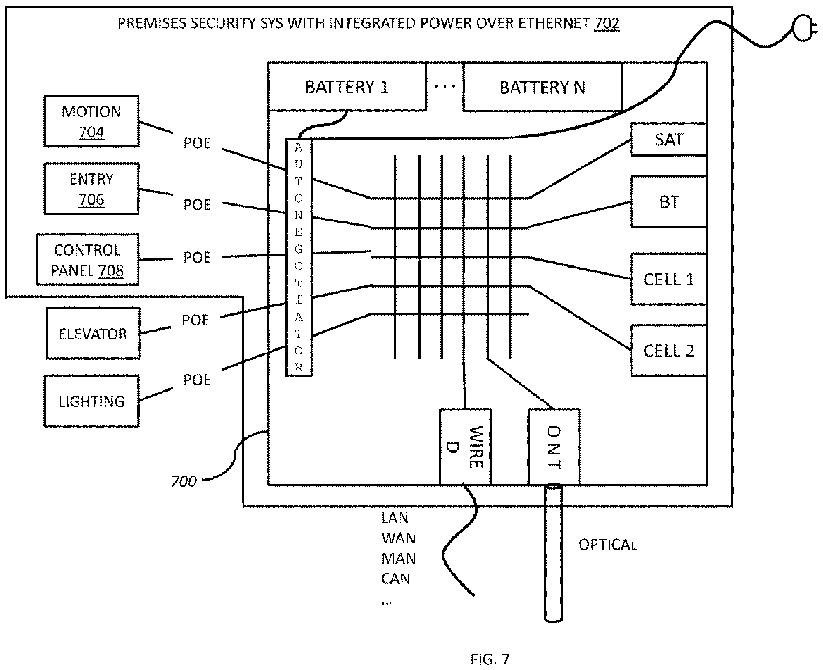

In embodiments, Fig. 7 depicts a variation of the embodiment of Fig. 6 in which a PoE via an injection device system 600 is integrated into an electronic premises security system 702 that includes security devices, such as motion sensors 704, entry sensors 706, a control panel 708 and the like being powered over Ethernet by the injection device.

The foregoing disclosure and description of the invention is illustrative and explanatory thereof. Various changes in the details of the illustrated structures, construction and method can be made.

Detailed embodiments of the present disclosure are disclosed herein; however, it is to be understood that the disclosed embodiments are merely exemplary of the disclosure, which may be embodied in various forms.

The terms "a" or "an," as used herein, are defined as one or more than one. The term "another," as used herein, is defined as at least a second or more. The terms "including" and/or "having", as used herein, are defined as comprising (i.e., open transition).

While only a few embodiments of the present disclosure have been shown and described, it will be obvious to those skilled in the art that many changes and modifications may be made thereunto.

The methods and systems described herein may be deployed in part or in whole through a machine that executes computer software, program codes, and/or instructions on a processor. The present disclosure may be implemented as a method on the machine, as a system or apparatus as part of or in relation to the machine, or as a computer program product embodied in a computer readable medium executing on one or more of the machines. In embodiments, the processor may be part of a server, cloud server, client, network infrastructure, mobile computing platform, stationary computing platform, or other computing platform. A processor may be any kind of computational or processing device capable of executing program instructions, codes, binary instructions and the like. The processor may be or may include a signal processor, digital processor, embedded processor, microprocessor or any variant such as a co-processor (math co-processor, graphic co-processor, communication co-processor and the like) and the like that may directly or indirectly facilitate execution of program code or program instructions stored thereon. In addition, the processor may enable execution of multiple programs, threads, and codes. The threads may be executed simultaneously to enhance the performance of the processor and to facilitate simultaneous operations of the application. By way of implementation, methods, program codes, program instructions and the like described herein may be implemented in one or more thread. The thread may spawn other threads that may have assigned priorities associated with them; the processor may execute these threads based on priority or any other order based on instructions provided in the program code. The processor, or any machine utilizing one, may include non-transitory memory that stores methods, codes, instructions and programs as described herein and elsewhere. The processor may access a non-transitory storage medium through an interface that may store methods, codes, and instructions as described herein and elsewhere. The storage medium associated with the processor for storing methods, programs, codes, program instructions or other type of instructions capable of being executed by the computing or processing device may include but may not be limited to one or more of a CD-ROM, DVD, memory, hard disk, flash drive, RAM, ROM, cache and the like.

A processor may include one or more cores that may enhance speed and performance of a multiprocessor. In embodiments, the process may be a dual core processor, quad core processors, other chip-level multiprocessor and the like that combine two or more independent cores (called a die).

The methods and systems described herein may be deployed in part or in whole through a machine that executes computer software on a server, client, firewall, gateway, hub, router, or other such computer and/or networking hardware. The software program may be associated with a server that may include a file server, print server, domain server, internet server, intranet server, cloud server, and other variants such as secondary server, host server, distributed server and the like. The server may include one or more of memories, processors, computer readable media, storage media, ports (physical and virtual), communication devices, and interfaces capable of accessing other servers, clients, machines, and devices through a wired or a wireless medium, and the like. The methods, programs, or codes as described herein and elsewhere may be executed by the server. In addition, other devices required for execution of methods as described in this application may be considered as a part of the infrastructure associated with the server.

The server may provide an interface to other devices including, without limitation, clients, other servers, printers, database servers, print servers, file servers, communication servers, distributed servers, social networks, and the like. Additionally, this coupling and/or connection may facilitate remote execution of program across the network. The networking of some or all of these devices may facilitate parallel processing of a program or method at one or more location without deviating from the scope of the disclosure. In addition, any of the devices attached to the server through an interface may include at least one storage medium capable of storing methods, programs, code and/or instructions. A central repository may provide program instructions to be executed on different devices. In this implementation, the remote repository may act as a storage medium for program code, instructions, and programs.

The software program may be associated with a client that may include a file client, print client, domain client, internet client, intranet client and other variants such as secondary client, host client, distributed client and the like. The client may include one or more of memories, processors, computer readable media, storage media, ports (physical and virtual), communication devices, and interfaces capable of accessing other clients, servers, machines, and devices through a wired or a wireless medium, and the like. The methods, programs, or codes as described herein and elsewhere may be executed by the client. In addition, other devices required for execution of methods as described in this application may be considered as a part of the infrastructure associated with the client.

The client may provide an interface to other devices including, without limitation, servers, other clients, printers, database servers, print servers, file servers, communication servers, distributed servers and the like. Additionally, this coupling and/or connection may facilitate remote execution of program across the network. The networking of some or all of these devices may facilitate parallel processing of a program or method at one or more location without deviating from the scope of the disclosure. In addition, any of the devices attached to the client through an interface may include at least one storage medium capable of storing methods, programs, applications, code and/or instructions. A central repository may provide program instructions to be executed on different devices. In this implementation, the remote repository may act as a storage medium for program code, instructions, and programs.

The methods and systems described herein may be deployed in part or in whole through network infrastructures. The network infrastructure may include elements such as computing devices, servers, routers, hubs, firewalls, clients, personal computers, communication devices, routing devices and other active and passive devices, modules and/or components as known in the art. The computing and/or non-computing device(s) associated with the network infrastructure may include, apart from other components, a storage medium such as flash memory, buffer, stack, RAM, ROM and the like. The processes, methods, program codes, instructions described herein and elsewhere may be executed by one or more of the network infrastructural elements. The methods and systems described herein may be adapted for use with any kind of private, community, or hybrid cloud computing network or cloud computing environment, including those which involve features of software as a service (SaaS), platform as a service (PaaS), and/or infrastructure as a service (laaS).

The methods, program codes, and instructions described herein and elsewhere may be implemented on a cellular network having multiple cells. The cellular network may either be frequency division multiple access (FDMA) network or code division multiple access (CDMA) network. The cellular network may include mobile devices, cell sites, base stations, repeaters, antennas, towers, and the like. The cell network may be a GSM, GPRS, 3G, EVDO, mesh, or other networks types.

The methods, program codes, and instructions described herein and elsewhere may be implemented on or through mobile devices. The mobile devices may include navigation devices, cell phones, mobile phones, mobile personal digital assistants, laptops, palmtops, netbooks, pagers, electronic books readers, music players and the like. These devices may include, apart from other components, a storage medium such as a flash memory, buffer, RAM, ROM and one or more computing devices. The computing devices associated with mobile devices may be enabled to execute program codes, methods, and instructions stored thereon. Alternatively, the mobile devices may be configured to execute instructions in collaboration with other devices. The mobile devices may communicate with base stations interfaced with servers and configured to execute program codes. The mobile devices may communicate on a peer-to-peer network, mesh network, or other communications network. The program code may be stored on the storage medium associated with the server and executed by a computing device embedded within the server. The base station may include a computing device and a storage medium. The storage device may store program codes and instructions executed by the computing devices associated with the base station.

The computer software, program codes, and/or instructions may be stored and/or accessed on machine readable media that may include: computer components, devices, and recording media that retain digital data used for computing for some interval of time; semiconductor storage known as random access memory (RAM); mass storage typically for more permanent storage, such as optical discs, forms of magnetic storage like hard disks, tapes, drums, cards and other types; processor registers, cache memory, volatile memory, non-volatile memory; optical storage such as CD, DVD; removable media such as flash memory (e.g. USB sticks or keys), floppy disks, magnetic tape, paper tape, punch cards, standalone RAM disks, Zip drives, removable mass storage, off-line, and the like; other computer memory such as dynamic memory, static memory, read/write storage, mutable storage, read only, random access, sequential access, location addressable, file addressable, content addressable, network attached storage, storage area network, bar codes, magnetic ink, and the like.

The methods and systems described herein may transform physical and/or intangible items from one state to another. The methods and systems described herein may also transform data representing physical and/or intangible items from one state to another.

The elements described and depicted herein, including in flowcharts and block diagrams throughout the figures, imply logical boundaries between the elements. However, according to software or hardware engineering practices, the depicted elements and the functions thereof may be implemented on machines through computer executable media having a processor capable of executing program instructions stored thereon as a monolithic software structure, as standalone software modules, or as modules that employ external routines, code, services, and so forth, or any combination of these, and all such implementations may be within the scope of the present disclosure. Examples of such machines may include, but may not be limited to, personal digital assistants, laptops, personal computers, mobile phones, other handheld computing devices, medical equipment, wired or wireless communication devices, transducers, chips, calculators, satellites, tablet PCs, electronic books, gadgets, electronic devices, devices having artificial intelligence, computing devices, networking equipment, servers, routers and the like. Furthermore, the elements depicted in the flowchart and block diagrams or any other logical component may be implemented on a machine capable of executing program instructions. Thus, while the foregoing drawings and descriptions set forth functional aspects of the disclosed systems, no particular arrangement of software for implementing these functional aspects should be inferred from these descriptions unless explicitly stated or otherwise clear from the context. Similarly, it will be appreciated that the various steps identified and described above may be varied, and that the order of steps may be adapted to particular applications of the techniques disclosed herein. All such variations and modifications are intended to fall within the scope of this disclosure. As such, the depiction and/or description of an order for various steps should not be understood to require a particular order of execution for those steps, unless required by a particular application, or explicitly stated or otherwise clear from the context.

The methods and/or processes described above, and steps associated therewith, may be realized in hardware, software or any combination of hardware and software suitable for a particular application. The hardware may include a general-purpose computer and/or dedicated computing device or specific computing device or particular aspect or component of a specific computing device. The processes may be realized in one or more microprocessors, microcontrollers, embedded microcontrollers, programmable digital signal processors or other programmable device, along with internal and/or external memory. The processes may also, or instead, be embodied in an application specific integrated circuit, a programmable gate array, programmable array logic, or any other device or combination of devices that may be configured to process electronic signals. It will further be appreciated that one or more of the processes may be realized as a computer executable code capable of being executed on a machine-readable medium.

The computer executable code may be created using a structured programming language such as C, an object oriented programming language such as C++, or any other high-level or low-level programming language (including assembly languages, hardware description languages, and database programming languages and technologies) that may be stored, compiled or interpreted to run on one of the above devices, as well as heterogeneous combinations of processors, processor architectures, or combinations of different hardware and software, or any other machine capable of executing program instructions.

Thus, in one aspect, methods described above and combinations thereof may be embodied in computer executable code that, when executing on one or more computing devices, performs the steps thereof. In another aspect, the methods may be embodied in systems that perform the steps thereof, and may be distributed across devices in a number of ways, or all of the functionality may be integrated into a dedicated, standalone device or other hardware. In another aspect, the means for performing the steps associated with the processes described above may include any of the hardware and/or software described above. All such permutations and combinations are intended to fall within the scope of the present disclosure.

While the disclosure has been disclosed in connection with the preferred embodiments shown and described in detail, various modifications and improvements thereon will become readily apparent to those skilled in the art. Accordingly, the spirit and scope of the present disclosure is not to be limited by the foregoing examples, but is to be understood in the broadest sense allowable by law.

The use of the terms "a" and "an" and "the" and similar referents in the context of describing the disclosure (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the disclosure and does not pose a limitation on the scope of the disclosure unless otherwise claimed. No language in the specification should be construed as indicating any non-claimed element as essential to the practice of the disclosure.

While the foregoing written description enables one of ordinary skill to make and use what is considered presently to be the best mode thereof, those of ordinary skill will understand and appreciate the existence of variations, combinations, and equivalents of the specific embodiment, method, and examples herein. The disclosure should therefore not be limited by the above described embodiment, method, and examples, but by all embodiments and methods within the scope and spirit of the disclosure.

Any element in a claim that does not explicitly state "means for" performing a specified function, or "step for" performing a specified function, is not to be interpreted as a "means" or "step" clause as specified in 35 U.S.C. §112(f). In particular, any use of "step of' in the claims is not intended to invoke the provision of 35 U.S.C. §112(f).

Persons of ordinary skill in the art may appreciate that numerous design configurations may be possible to enjoy the functional benefits of the inventive systems. Thus, given the wide variety of configurations and arrangements of embodiments of the present invention the scope of the invention is reflected by the breadth of the claims below rather than narrowed by the embodiments described above.

## Claims

1. System 100, 200, 300, 400, 600, 700 for premises security, comprising:
- a primary power input port for primary power 128, 214, 614 ;
- a rechargeable power supply 106 ;
- an injection device 104, 611, 711 include the rechargeable power supply 106 that automatically provides power to connected devices 124 on the DC side in the event of a loss of primary power 128, 214, 614 to the system;
- a plurality of connected electronic premises security system devices 124, 212, 604, 606, 608, 702, 704, 706, 708, connected to said injection device as to receive uninterrupted Power over Ethernet (PoE);
- a plurality of connected devices 618, 620, 718, 720 connected to said injection device;
- a wireless device 110, 112, 116, 210, 218, 220, connected to the injection device and at least one connected electronic premises security system device of said plurality of connected electronic premises security system devices; and
- a processor 126, 302, 404, 512, 612, 712 connected to the at least one connected electronic premises security system device of said plurality of connected electronic premises security system devices and at least one connected device of said plurality of connected devices so as to redirect network connectivity of the at least one connected electronic premises security system device from wired network connectivity to the wireless device when wired network connectivity is lost, before the at least one connected device.

2. The system for premises security of claim 1, wherein the wireless device 110, 112, 116, 210, 218, 220 provides the network connectivity by at least one of a cellular network, a Bluetooth^{™} network, an 802.11 WiFi network, and an orbital satellite.

3. The system for premises security of claim 1, wherein the wireless device comprises a removable internal card 218, 220.

4. The system for premises security of claim 1, further comprising a switch, such as an Ethernet switch 506 to facilitate communicating among powered devices over Ethernet, between powered devices and through a SFP module to an external network, between a processor 512 that may control the system and either the powered devices, the SFP module 510 and the like., the Ethernet switch 506 further connect to a wireless port of the system that may facilitate access to external networks when communication through the SFP module is not possible. Description [49]

5. The system for premises security of claim 1, further comprising: an interface 114, 120, 208 by which a user is enabled to configure the system.

6. The system for premises security of claim 1, further comprising: a pluggable transceiver port 202.

7. The system for premises security of claim 6, wherein said pluggable transceiver port 202 comprises at least one of compact SFP, SFP, SFP+, and SFP28.

8. The system for premises security of claim 1, further comprising: an Optical Network Terminal interface 114, 208.

9. The system for premises security of claim 1, wherein the processor is connected to the injection device, the processor being operated by system firmware, wherein the system firmware programmable without interrupting automatically providing power to so as to connect said plurality of connected electronic premises security system devices to said injection device for uninterrupted Power over Ethernet (PoE).

10. The system for premises security of claim 1, wherein said rechargeable power supply is comprised of a plurality of processor 408 controlled power capsules 402.

## Patentansprüche

1. System 100, 200, 300, 400, 600, 700 für eine Gebäudesicherheit, umfassend:
- einen Primärstromeingangsanschluss für Primärstrom 128, 214, 614;
- eine wiederaufladbare Stromversorgung 106;
- eine Einspeisevorrichtung 104, 611, 711, die die wiederaufladbare Stromversorgung 106 einschließt, die im Falle eines Ausfalls des Primärstroms 128, 214, 614 des Systems den verbundenen Vorrichtungen 124 auf der Gleichstromseite automatisch Strom bereitstellt;
- eine Vielzahl von verbundenen elektronischen Gebäudesicherheitssystemvorrichtungen 124, 212, 604, 606, 608, 702, 704, 706, 708, die mit der Einspeisevorrichtung verbunden sind, um unterbrechungsfrei Power over Ethernet (PoE) zu empfangen;
- eine Vielzahl von verbundenen Vorrichtungen 618, 620, 718, 720, die mit der Einspeisevorrichtung verbunden sind;
- eine Drahtlosvorrichtung 110, 112, 116, 210, 218, 220, die mit der Einspeisevorrichtung und mindestens einer verbundenen elektronischen Gebäudesicherheitssystemvorrichtung der Vielzahl von verbundenen elektronischen Gebäudesicherheitssystemvorrichtungen verbunden ist; und
- einen Prozessor 126, 302, 404, 512, 612, 712, der mit der mindestens einen verbundenen elektronischen Gebäudesicherheitssystemvorrichtung der Vielzahl von verbundenen elektronischen Gebäudesicherheitssystemvorrichtungen und mit mindestens einer verbundenen Vorrichtung der Vielzahl von verbundenen Vorrichtungen verbunden ist, um bei Ausfall einer kabelgebundenen Netzwerkkonnektivität die Netzwerkkonnektivität der mindestens einen verbundenen elektronischen Gebäudesicherheitssystemvorrichtung von der kabelgebundenen Netzwerkkonnektivität auf die Drahtlosvorrichtung umzuleiten, vor der mindestens einen verbundenen Vorrichtung.

2. System für die Gebäudesicherheit nach Anspruch 1, wobei die Drahtlosvorrichtung 110, 112, 116, 210, 218, 220 die Netzwerkkonnektivität über mindestens eines von einem Mobilfunknetzwerk, einem Bluetooth^{™}-Netzwerk, einem 802.11 WiFi-Netzwerk und einen Orbitalsatelliten bereitstellt.

3. System für die Gebäudesicherheit nach Anspruch 1, wobei die Drahtlosvorrichtung eine entfernbare interne Karte 218, 220 umfasst.

4. System für die Gebäudesicherheit nach Anspruch 1, ferner umfassend einen Switch, wie einen Ethernet-Switch 506, um ein Kommunizieren unter strombetriebenen Vorrichtungen über Ethernet, zwischen strombetriebenen Vorrichtungen und durch ein SFP-Modul mit einem externen Netzwerk, zwischen einem Prozessor 512, der das System steuern kann, und entweder den strombetriebenen Vorrichtungen, dem SFP-Modul 510 und dergleichen zu ermöglichen, wobei der Ethernet-Switch 506 ferner mit einem drahtlosen Anschluss des Systems verbunden ist, der einen Zugriff auf externe Netzwerke ermöglichen kann, wenn eine Kommunikation über das SFP-Modul nicht möglich ist. Beschreibung [49]

5. System für die Gebäudesicherheit nach Anspruch 1, ferner umfassend: eine Schnittstelle 114, 120, 208, über die ein Benutzer das System konfigurieren kann.

6. System für die Gebäudesicherheit nach Anspruch 1, ferner umfassend: einen steckbaren Sendeempfängeranschluss 202.

7. System für die Gebäudesicherheit nach Anspruch 6, wobei der steckbare Sendeempfängeranschluss 202 mindestens einen umfasst von Kompakt-SFP, SFP, SFP+ und SFP28.

8. System für die Gebäudesicherheit nach Anspruch 1, ferner umfassend: eine Schnittstelle eines optischen Netzwerkterminals 114, 208.

9. System für die Gebäudesicherheit nach Anspruch 1, wobei der Prozessor mit der Einspeisevorrichtung verbunden ist, wobei der Prozessor durch System-Firmware betrieben wird, wobei die System-Firmware, die ohne Unterbrechung programmierbar ist, automatisch Strom bereitstellt, um die Vielzahl von verbundenen elektronischen Gebäudesicherheitssystemvorrichtungen mit der Einspeisevorrichtung zu verbinden, für einen unterbrechungsfreien Power over Ethernet (PoE).

10. System für die Gebäudesicherheit nach Anspruch 1, wobei die wiederaufladbare Stromversorgung aus einer Vielzahl von prozessorgesteuerten 408 Stromkapseln 402 besteht.

## Revendications

1. Système 100, 200, 300, 400, 600, 700 destiné à la sécurité de locaux, comprenant :
- un port d'entrée de puissance primaire pour de la puissance primaire 128, 214, 614 ;
- une alimentation en puissance rechargeable 106 ;
- un dispositif d'injection 104, 611, 711 comportant l'alimentation en puissance rechargeable 106 qui fournit automatiquement de la puissance à des dispositifs connectés 124 sur le côté CC dans le cas d'une perte de puissance primaire 128, 214, 614 au système ;
- une pluralité de dispositifs électroniques connectés de système de sécurité de locaux 124, 212, 604, 606, 608, 702, 704, 706, 708, connectés audit dispositif d'injection de façon à recevoir une alimentation en puissance par Ethernet (PoE) sans interruption ;
- une pluralité de dispositifs connectés 618, 620, 718, 720 connectés audit dispositif d'injection ;
- un dispositif sans fil 110, 112, 116, 210, 218, 220, connecté au dispositif d'injection et au moins un dispositif électronique connecté de système de sécurité de locaux de ladite pluralité de dispositifs électroniques connectés de système de sécurité de locaux ; et
- un processeur 126, 302, 404, 512, 612, 712 connecté à l'au moins un dispositif électronique connecté de système de sécurité de locaux de ladite pluralité de dispositifs électroniques connectés de système de sécurité de locaux et à au moins un dispositif connecté de ladite pluralité de dispositifs connectés de façon à rediriger une connectivité réseau de l'au moins un dispositif électronique connecté de système de sécurité de locaux de la connectivité de réseau câblé au dispositif sans fil lorsque la connectivité de réseau câblé est perdue, avant l'au moins un dispositif connecté.

2. Système destiné à la sécurité de locaux selon la revendication 1, dans lequel le dispositif sans fil 110, 112, 116, 210, 218, 220 fournit la connectivité réseau par au moins l'un parmi un réseau cellulaire, un réseau Bluetooth^{™}, un réseau Wi-Fi 802.11 et un satellite orbital.

3. Système destiné à la sécurité de locaux selon la revendication 1, dans lequel le dispositif sans fil comprend une carte interne amovible 218, 220.

4. Système destiné à la sécurité de locaux selon la revendication 1, comprenant en outre un commutateur, tel qu'un commutateur Ethernet 506 pour faciliter une communication parmi les dispositifs alimentés en puissance par Ethernet, entre les dispositifs alimentés en puissance et par l'intermédiaire d'un module SFP vers un réseau externe, entre un processeur 512 qui peut commander le système et l'un ou l'autre des dispositifs alimentés en puissance, le module SFP 510 et similaires, le commutateur Ethernet 506 se connecte en outre à un port sans fil du système qui peut faciliter un accès à des réseaux externes lorsqu'une communication par l'intermédiaire du module SFP n'est pas possible. Description [49]

5. Système destiné à la sécurité de locaux selon la revendication 1, comprenant en outre : une interface 114, 120, 208 par laquelle un utilisateur est habilité à configurer le système.

6. Système destiné à la sécurité de locaux selon la revendication 1, comprenant en outre : un port émetteur-récepteur enfichable 202.

7. Système destiné à la sécurité de locaux selon la revendication 6, dans lequel ledit port émetteur-récepteur enfichable 202 comprend au moins l'un parmi SFP compact, SFP, SFP+ et SFP28.

8. Système destiné à la sécurité de locaux selon la revendication 1, comprenant en outre : une interface de terminal réseau optique 114, 208.

9. Système destiné à la sécurité de locaux selon la revendication 1, dans lequel le processeur est connecté au dispositif d'injection, le processeur étant exploité par un microprogramme système, dans lequel le microprogramme système programmable fournit automatiquement sans interruption de la puissance de façon à connecter ladite pluralité de dispositifs électroniques connectés de système de sécurité de locaux audit dispositif d'injection pour une alimentation par Ethernet (PoE) sans interruption.

10. Système destiné à la sécurité de locaux selon la revendication 1, dans lequel ladite alimentation en puissance rechargeable est constituée d'une pluralité de capsules de puissance 402 commandées par processeur 408.
